# EUROPÄISCHE PATENTANMELDUNG

(11) **EP 3 530 162 A1**
(43) Veröffentlichungstag der Anmeldung: **28.08.2019**
(21) Anmeldenummer: 19157465.6
(22) Anmeldetag: 15.02.2019
(51) Int. Cl.: A47J 43/25

(54) **REIBE UND ZUGEHÖRIGE REIBEEINRICHTUNG**

(30) Priorität: 27.02.2018 DE 102018104420
(71) Anmelder: WMF Group GmbH, 73312 Geislingen/Steige (DE)
(72) Erfinder: KÜHN, Manuel, 73525 Schwäbisch Gmünd (DE)
(74) Vertreter: Pfenning, Meinig & Partner mbB

(57) **Zusammenfassung**

Reibe (1) mit mindestens einer Reibefläche zum Abreiben von Reibgut die aus einem ein Reibmuster aufweisenden Blech (2) mit einer ersten und zweiten Oberfläche (3, 4) gebildet ist und das Reibmuster eine Vielzahl von paarweise angeordneten Ausnehmungen (5, 6, 5',6', 5", 6",...) mit in entgegengesetzte Richtungen weisenden Reibkanten (7, 8, 7', 8', 7",8", ...) aufweist, wobei die paarweise angeordneten Ausnehmungen (5, 6, 5', 6', 5", 6",...) mittels Stegen (9,9',9",...) getrennt sind, dadurch gekennzeichnet, dass die Reibkanten (7, 7', 7", 8, 8', 8",...) planar zur ersten Oberfläche angeordnet sind und die Winkel (α, α', α",...) an den Reibkanten (7, 7', 7", 8, 8', 8",...) im Bereich von 80° bis 110° liegen.

## Beschreibung

Die Erfindung betrifft eine Reibe mit mindestens einer Reibfläche zum Abreiben von Reibgut, die aus einem ein Reibmuster aufweisenden Blech mit einer ersten und zweiten Oberfläche gebildet ist und das Reibmuster eine Vielzahl von paarweise angeordneten Ausnehmungen mit in entgegengesetzte Richtungen weisenden Reibkanten aufweist, wobei die paarweise angeordneten Ausnehmungen mittels Stegen getrennt sind. Dabei sind die Reibkanten planar zur ersten Oberfläche angeordnet und in etwa rechtwinklig zur ersten Oberfläche ausgebildet. Weiterhin betrifft die vorliegende Erfindung eine Reibeinrichtung, die eine entsprechende Reibe sowie ein Behälter zum Sammeln des Reibguts enthält.

In Haushalten werden Reiben in vielfältiger Weise zur Herstellung ein Reibgut eingesetzt, z.B. bei der Herstellung von geriebenem Käse oder Gemüse. Üblicherweise weisen diese Reiben eine ebene Reibfläche auf und können auf einer Arbeitsfläche, einem Teller oder einer das Reibgut auffangenden Schüssel aufgesetzt werden. Die Reibflächen verfügen in der Regel über ein durchgehendes und einheitliches Reibmuster, es existieren aber auch Varianten, bei denen Reiben mit unterschiedlichen Reibmustern zur Erzeugung unterschiedlich geformter Reibgüter eingesetzt werden.

Insbesondere beim Reiben von sehr harten Lebensmitteln, z. B. Hartkäse, ist es wünschenswert, dass der Kraftaufwand für den Benutzer minimiert wird.

In der WO 2012/047894 A1 wird dies dadurch erreicht, dass die V-förmigen Schneidkanten aus der Reibfläche herausragen und so der Abrieb mit geringerem Kraftaufwand erfolgen kann.

Allerdings bringen solche Konstruktionen der Reibkanten auch erhebliche Nachteile im Hinblick auf die Arbeitssicherheit dieser Geräte mit sich. So können leicht erhabene Reibkanten, d.h. Reibkanten, die sich aus der Ebene der Reibfläche erheben, zu Verletzungen, insbesondere der Fingerkuppen, führen, wenn das Reibgut mit den Händen über die Reibe geführt wird.

Zur Vermeidung solcher Verletzungen werden teilweise Gleitaufsätze für Reiben eingesetzt, in denen das zu reibende Lebensmittel aufgenommen wird und durch das ein unmittelbarer Kontakt von Reibe zu Fingerkuppe unterbunden wird. Allerdings sind solche Gleitaufsätze teilweise unhandlich bzw. erhöhen den erforderlichen Kraftaufwand für den Nutzer.

Ausgehend hiervon war es Aufgabe der vorliegenden Erfindung, eine Reibe bereitzustellen, die die beschriebenen Nachteile der aus dem Stand der Technik bekannten Reiben überwindet und ein Reiben mit hoher Arbeitssicherheit bei gleichzeitig leichter Bedienbarkeit und geringem Kraftaufwand ermöglicht.

Diese Aufgabe wird durch die Reibe mit den Merkmalen des Anspruchs 1 und die Reibeinrichtung mit den Merkmalen des Anspruchs 14 gelöst. Die weiteren abhängigen Ansprüche zeigen vorteilhafte Weiterbildungen auf.

Erfindungsgemäß wird eine Reibe mit mindestens einer Reibfläche zum Abreiben von Reibgut bereitgestellt, die aus einem ein Reibmuster aufweisenden Blech mit einer ersten und zweiten Oberfläche gebildet ist und das Reibmuster eine Vielzahl von paarweise angeordneten Ausnehmungen mit in entgegengesetzte Richtungen weisenden Reibkanten aufweist, wobei die paarweise angeordneten Ausnehmungen mittels Stegen getrennt sind.

Die erfindungsgemäße Reibe zeichnet sich dabei dadurch aus, dass die Reibkanten planar zur ersten Oberfläche angeordnet sind und die Winkel an den Reibkanten im Bereich von 80° bis 110° liegen. Dies bedeutet, dass sich die Reibkanten in der ersten Oberfläche befinden und nicht aus dieser herausragen. Gemeinsam mit der erfindungsgemäßen Maßnahme, dass die Reibkanten im Wesentlichen rechtwinklig sind, kann eine deutliche Verbesserung hinsichtlich der Arbeitssicherheit der erfindungsgemäßen Reibe erreicht werden, da die Reibkanten nicht scharf und nicht erhaben sind, was die Gefahr von Schnittverletzungen an den Fingern deutlich reduziert.

Eine bevorzugte Ausführungsform sieht vor, dass auch an der zweiten Oberfläche in entgegengesetzte Richtungen weisenden Reibkanten angeordnet sind und die zweite Oberfläche so auch als Reibfläche nutzbar ist, wobei die Reibkanten an der zweiten Oberfläche planar zur zweiten Oberfläche angeordnet sind und die Winkel an den Reibkanten der zweiten Oberfläche im Bereich von 80° bis 110° liegen. Die zweite Reibfläche erfordert keinen großen Mehraufwand in der Produktion der Reibe, ermöglicht aber bei klebrigen Lebensmitteln, die an den Reibkanten hängen bleiben, dass durch Wenden der Reibe eine neue und nicht verschmutzte Reibfläche zur Verfügung steht.

Die Reibkanten sind vorzugsweise V-förmig, abgerundet, V-förmig oder sichelförmig. Grundsätzlich sind aber alle Geometrien einsetzbar, die ein Reiben oder Schaben des Lebensmittels ermöglicht. Hierbei kann die Geometrie der Reibkanten auch in Abhängigkeit des zu reibenden Lebensmittels gewählt werden. Die Reibkanten können für verschiedene paarweise angeordnete Ausnehmungen unterschiedliche Formen bzw. Geometrien aufweisen.

Es ist weiter bevorzugt, dass die paarweise angeordneten Ausnehmungen spiegelsymmetrisch sind und bevorzugt in Form einer durch die Stege halbierten Wabe angeordnet sind. Diese Anordnung hat den Vorteil, dass eine Wabenstruktur eine besondere Stabilität aufweist, was im Hinblick auf die Reibe insofern wichtig ist, da so die Materialstärke des Blechs reduziert werden kann.

Eine besonders bevorzugte Ausführungsform sieht vor, dass die paarweise angeordneten Ausnehmungen in Form einer durch die Stege halbierten Wabe in Reihen senkrecht zur Reibrichtung angeordnet sind, wobei in benachbarten Reihe die Waben zueinander um eine halbe Wabenbreite versetzt sind. Diese Struktur zeichnet sich durch eine nochmals verbesserte Stabilität aus, da so eine alternierende Anordnung von Wabe und Steg vorliegt.

Die Ausnehmungen weisen vorzugsweise eine Breite im Bereich von 15 bis 22 mm, bevorzugt von 17 bis 20 mm und/oder eine Länge im Bereich von 15 bis 22 mm, bevorzugt von 15 bis 17 mm auf.

Das Verhältnis der Breite der Stege zur Breite der Ausnehmung liegt vorzugsweise im Bereich von 25 bis 75 %.

Es ist weiter bevorzugt, dass die Winkel der Reibkanten zur ersten Oberfläche und die Winkel der Reibkante zur zweiten Oberfläche unabhängig voneinander im Bereich von 85° bis 105°, bevorzugt von 88° bis 95°, besonders bevorzugt von 89° bis 92° liegen und insbesondere 90° betragen.

Vorzugsweise erlauben die in entgegengesetzte Richtungen weisenden Reibkanten ein Abreiben des Reibguts in entgegengesetzten Richtungen. Durch die so erreichte Verdoppelung der Reibkanten wird ein wesentlich effizienterer Abrieb ermöglicht.

Das Material des Blechs ist vorzugsweise ausgewählt aus der Gruppe bestehend aus Metallen, Stählen, insbesondere Edelstahl, Keramiken, keramisch beschichteten Stählen, und Kombination hiervon.

Es ist weiter bevorzugt, dass die Ausnehmungen mittels chemischen Ätzen erzeugt wurden, wobei das Blech bevorzugt eine Dicke im Bereich von 0,5 bis 5 mm, besonders bevorzugt von 1 bis 3 mm aufweist.

Eine bevorzugte Ausführungsform sieht vor, dass die Ausnehmungen mittels Laser erzeugt wurden, wobei das Blech bevorzugt eine Dicke im Bereich von 0,5 bis 5 mm, besonders bevorzugt von 1 bis 3 mm aufweist.

Die Reibe weist vorzugsweise einen Griff auf oder ist mit einem Griff koppelbar. Hierdurch kann die Handhabbarkeit der Reibe deutlich erhöht werden.

Erfindungsgemäß wird ebenso eine Reibeinrichtung bereitgestellt, die eine Reibe, so wie sie zuvor beschrieben wurde, und einen Behälter zum Sammeln des Reibguts aufweist.

Anhand der nachfolgenden Figuren soll der erfindungsgemäße Gegenstand näher erläutert werden, ohne diesen auf die hier gezeigten spezifischen Ausführungsformen einschränken zu wollen.
Fig. 1 zeigt eine erste Ausführungsform einer erfindungsgemäßen Reibe in der Aufsicht.
Fig. 2 zeigt eine zweite Ausführungsform einer erfindungsgemäßen Reibe in der Aufsicht.
Fig. 3 zeigt eine dritte Ausführungsform einer erfindungsgemäßen Reibe in der Aufsicht.
Fig. 4 zeigt eine Ausführungsform der Reibe mit Griffstück.
Fig. 5 zeigt eine erfindungsgemäße Reibeinheit mit Reibe und Container.

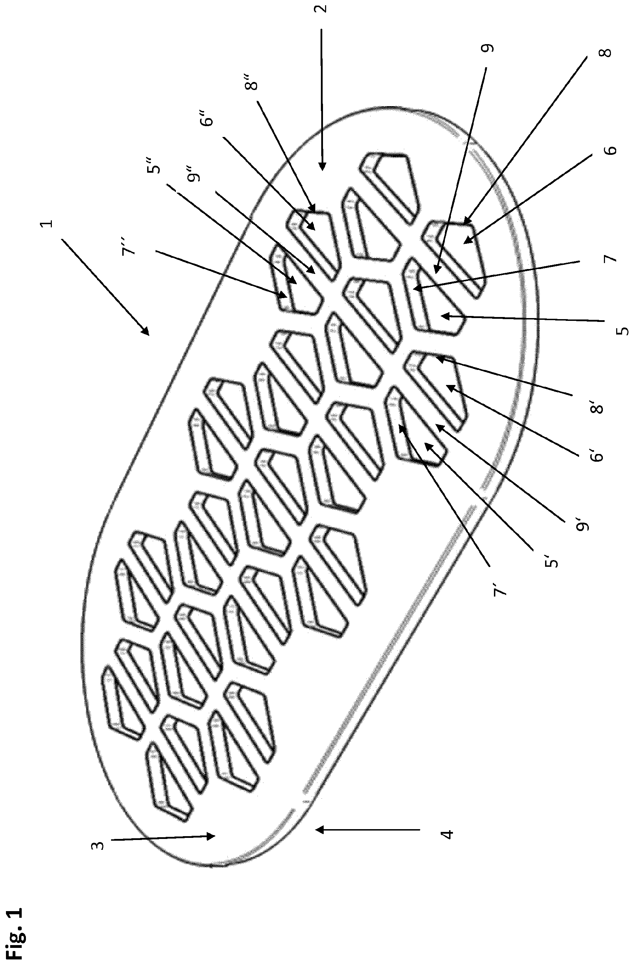

In Fig. 1 ist eine Reibe 1 dargestellt, die aus einem mit einem Reibmuster versehenen Blech 2 besteht. Diese Reibe 1 weist eine erste Oberfläche 3 und eine zweite Oberfläche 4, d.h. eine Vorder- und Rückseite auf.

Das Reibmuster setzt sich aus einer Vielzahl von Ausnehmungen zusammen, wobei die Ausnehmungen 5 und 6, die Ausnehmungen 5' und 6' und die Ausnehmungen 5" und 6" jeweils paarweise angeordnet sind, die durch Stege 9, 9' und 9" voneinander getrennt sind, wobei die paarwiese angeordneten Ausnehmungen eine durch den Steg unterbrochene Wabenform aufweisen.

Die bezeichneten Ausnehmungen weisen nun eine erste Reibkante 7, 7' und 7" auf. In die entgegengesetzte Richtung weisen Reibkanten 8, 8' und 8". Hierdurch wird ein Abreiben des Lebensmittels in entgegengesetzte Richtungen ermöglicht.

In Fig. 1 sind nun die Reibkanten auf der Vorderseite der Reibe, d.h. der ersten Oberfläche 3 dargestellt, allerdings können auf der Rückseite, d.h. der zweiten Oberfläche 4 in gleicher Weise Reibkanten angeordnet sein.

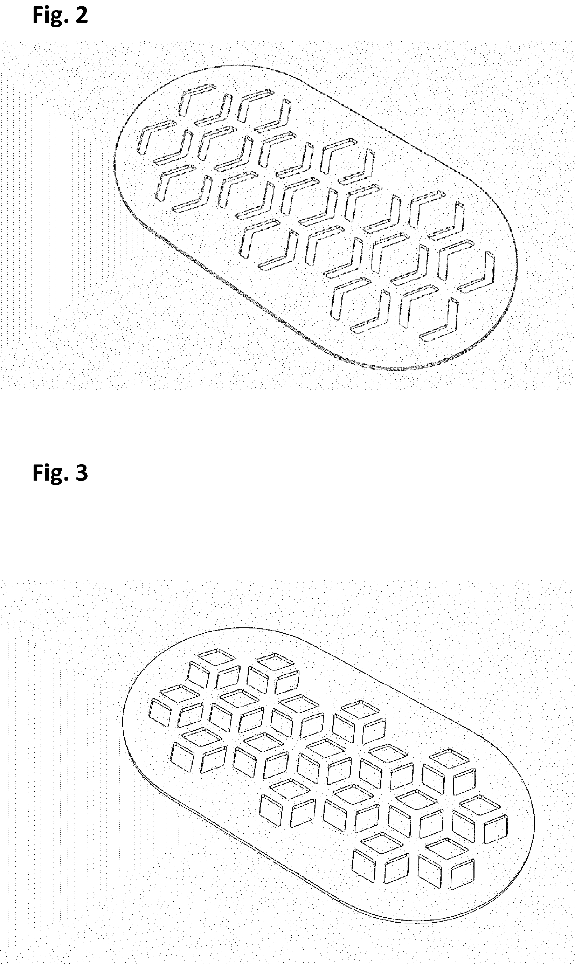

In Fig. 2 und Fig. 3 sind weitere erfindungsgemäße Reiben dargestellt, die vom Aufbau identisch zu der Reibe in Fig. 1 sind und sich lediglich im Reibmuster unterscheiden.

So zeigt Fig. 2 ein Reibmuster mit V-förmigen Ausnehmungen. Die V-förmigen Ausnehmungen weisen nun eine erste Reibkante auf, die mit einer benachbarten und in die entgegengesetzte Richtung weisenden V-förmigen Ausnehmung gruppiert ist.

Fig. 3 zeigt ein Reibmuster mit rautenförmigen Ausnehmungen. Hierbei sind drei rautenförmige Ausnehmungen so zueinander orientiert, dass diese Ausnehmungen eine durch drei Stege unterbrochene Wabenform bilden.

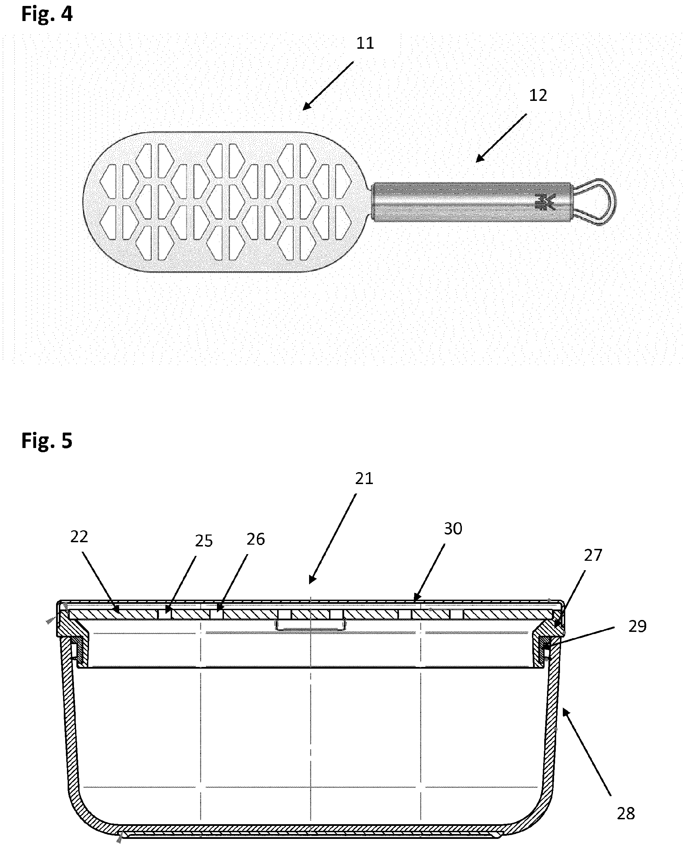

In Fig. 4 ist eine erfindungsgemäße Reibe 11 dargestellt, die mit einem Griffstück 12 gekoppelt ist. Die Kopplung zwischen Reibe 11 und Griff 12 kann form-, kraft- oder stoffschlüssig erfolgen, z.B. mittels einer Steckverbindung.

In Fig. 5 ist eine erfindungsgemäße Reibeinheit 21 mit einer erfindungsgemäßen Reibe, die aus einem Blech 22 mit einer Vielzahl von paarweise angeordneten Ausnehmungen 25, 26 besteht. Die Reibe wird in einem Rahmen 27 gehalten, der mit einem Container 28 kraftschlüssig und reversibel verbunden ist. Durch die Dichtung 29 wird ein Schutz des Reibguts vor der Umgebungsatmosphäre sichergestellt.

## Patentansprüche

1. Reibe (1) mit mindestens einer Reibefläche zum Abreiben von Reibgut, die aus einem ein Reibmuster aufweisenden Blech (2) mit einer ersten und zweiten Oberfläche (3, 4) gebildet ist und das Reibmuster eine Vielzahl von paarweise angeordneten Ausnehmungen (5, 6, 5',6', 5",6",...) mit in entgegengesetzte Richtungen weisenden Reibkanten (7, 8, 7', 8', 7",8", ...) aufweist, wobei die paarweise angeordneten Ausnehmungen (5, 6, 5',6', 5",6",...) mittels Stegen (9,9',9",...) getrennt sind,
**dadurch gekennzeichnet, dass** die Reibkanten (7, 7', 7", 8, 8', 8",...) planar zur ersten Oberfläche angeordnet sind und die Winkel (a, a', α",...) an den Reibkanten (7, 7', 7", 8, 8', 8",...) im Bereich von 80° bis 110° liegen.

2. Reibe nach Anspruch 1,
**dadurch gekennzeichnet, dass** auch an der zweiten Oberfläche (4) in entgegengesetzte Richtungen weisenden Reibkanten angeordnet sind und die zweite Oberfläche (4) so auch als Reibfläche nutzbar ist, wobei die Reibkanten an der zweiten Oberfläche (4) planar zur zweiten Oberfläche angeordnet sind und die Winkel (β, β', β",...) an den Reibkanten der zweiten Oberfläche (4) im Bereich von 80° bis 110° liegen.

3. Reibe nach einem der vorhergehenden Ansprüche,
**dadurch gekennzeichnet, dass** die Reibkanten (7, 7', 7", 8, 8', 8",...) V-förmig, abgerundet V-förmig oder sichelförmig sind, wobei die Reibkanten für verschiedene paarweise angeordneten Ausnehmungen (5, 6, 5',6', 5",6",...) unterschiedliche Formen aufweisen können.

4. Reibe nach einem der vorhergehenden Ansprüche,
**dadurch gekennzeichnet, dass** die paarweise angeordneten Ausnehmungen (5, 6, 5',6', 5",6",...) spiegelsymmetrisch sind und bevorzugt die Form einer durch die Stege (9,9',9") halbierten Wabe aufweist.

5. Reibe nach dem vorhergehenden Anspruch,
**dadurch gekennzeichnet, dass** die paarweise angeordneten Ausnehmungen (5, 6, 5',6', 5",6",...) in Form einer durch die Stege (9,9',9") halbierten Wabe in Reihen senkrecht zur Reibrichtung angeordnet sind, wobei in benachbarten Reihe die Waben zueinander um eine halbe Wabenbreite versetzt sind.

6. Reibe nach einem der vorhergehenden Ansprüche,
**dadurch gekennzeichnet, dass** die Ausnehmungen (5, 6, 5',6', 5",6",...) eine Breite im Bereich von 15 bis 22 mm, bevorzugt von 17 bis 20 mm und/oder eine Länge im Bereich von 15 bis 22 mm, bevorzugt von 15 bis 17mm aufweisen.

7. Reibe nach einem der vorhergehenden Ansprüche,
**dadurch gekennzeichnet, dass** das Verhältnis der Breite der Stege (9,9',9",...) zur Breite der Ausnehmung (5, 6, 5',6', 5",6",...) im Bereich von 25 bis 75 % liegt.

8. Reibe nach einem der vorhergehenden Ansprüche,
**dadurch gekennzeichnet, dass** die Winkel der Reibkante (7) zur ersten Oberfläche und die Winkel der Reibkante (8) zur zweiten Oberfläche unabhängig voneinander im Bereich von 90° bis 105°, bevorzugt von 90° bis 95°, besonders bevorzugt von 90° bis 92° liegen.

9. Reibe nach einem der vorhergehenden Ansprüche,
**dadurch gekennzeichnet, dass** die in entgegengesetzte Richtungen weisenden Reibkanten (7, 7', 7", 8, 8', 8",...) ein Abreiben des Reibguts in entgegengesetzte Richtungen erlauben.

10. Reibe nach einem der vorhergehenden Ansprüche,
**dadurch gekennzeichnet, dass** das Material des Blechs (2) ausgewählt ist aus der Gruppe bestehend aus Metallen, Stählen, insbesondere Edelstahl, Keramiken, keramisch beschichteten Stählen und Kombinationen hiervon.

11. Reibe nach einem der vorhergehenden Ansprüche,
**dadurch gekennzeichnet, dass** die Ausnehmungen (5, 6, 5',6', 5",6",...) mittels chemischen Ätzen erzeugt wurden, wobei das Blech (2) bevorzugt eine Dicke im Bereich von 0,5 bis 5 mm, besonders bevorzugt von 1 bis 3 mm aufweist.

12. Reibe nach einem der vorhergehenden Ansprüche,
**dadurch gekennzeichnet, dass** die Ausnehmungen (5, 6, 5',6', 5",6",...) mittels Laser erzeugt wurden, wobei das Blech (2) bevorzugt eine Dicke im Bereich von 0,5 bis 5 mm, besonders bevorzugt von 1 bis 3 mm aufweist.

13. Reibe nach einem der vorhergehenden Ansprüche,
**dadurch gekennzeichnet, dass** die Reibe einen Griff aufweist oder mit einem Griff koppelbar ist.

14. Reibeinrichtung enthaltend eine Reibe nach einem der Ansprüche 1 bis 13 und einen Behälter zum Sammeln des Reibguts.
